# EUROPÄISCHE PATENTANMELDUNG

(11) **EP 3 082 075 A1**
(43) Veröffentlichungstag der Anmeldung: **19.10.2016**
(21) Anmeldenummer: 16160560.5
(22) Anmeldetag: 16.03.2016
(51) Int. Cl.: G06Q 10/00

(54) **VERFAHREN ZUM MEHRSTUFIGEN VERGLEICH ZWEIER TEXTDOKUMENTE**

(30) Priorität: 14.04.2015 DE 102015206629
(71) Anmelder: Heidelberger Druckmaschinen AG, 69115 Heidelberg (DE)
(72) Erfinder: Brand, Michael, 69168 Wiesloch (DE); Rapke-Kraft, Petra, 69168 Wiesloch (DE); Ullrich, Thomas, 69190 Walldorf (DE)

(57) **Zusammenfassung**

Verfahren zur Wartung von Industriemaschinen, wobei durch einen Rechner ein mehrstufiger Vergleich zwischen einer eine Wartungs-Checlcliste mit mehreren Einträgen mit jeweils einer Identifikationsnummer und einer Wartungsdetailbeschreibung aus dem Handbuch der Maschine mit mehreren hierarchisch gegliederten Kapiteln durchgeführt wird, die folgenden Schritte umfassend:
- Extraktion der in jedem Eintrag in der Wartungs-Checkliste enthaltenen Parameter als Suchparameter, wobei die Suchparameter hierarchisch gegliedert sind
- Abgleich der Suchparameter mit den Überschriften der Kapitel aus der Wartungsdetailbeschreibung, wobei die höchste Hierarchieebene der Suchparameter der ersten Kapitelebene in der Wartungsdetailbeschreibung und jede nächsttiefere Hierarchieebene der Suchparameter der nächsttieferen Unterlcapitelebene in der Waiiungsdetailbeschreibung zugeordnet ist
- Auswahl des gefundenen Unterkapitels aus der Wartungsdetailbeschreibung, das der tiefsten Hierarchieebene der Suchparameter entspricht und ermitteln der Position in der Wartungsdetailbeschreibung
- Abspeichern der Position und damit Verknüpfen des gefundenen Unterkapitels aus der Wartungsdetailbeschreibung mit der Identifikationsnummer des Eintrags aus der Wartungs-Checlcliste in einer Referenztabelle
- Anzeige des entsprechenden Unterkapitels aus der Wartungsdetailbeschreibung auf einem mit dem Rechner verbundenen Display bei Durchführen der Wartung gemäß des Eintrags aus der Wartungs-Checlcliste

## Beschreibung

Die vorliegende Erfindung betrifft ein Verfahren zur Wartung von Industriemaschinen und eine Software für eine Wartungssteuerung.

Die Erfindung liegt in dem technischen Gebiet der Bediensoftware.

Für die Wartung von Industriemaschinen existieren Wartungshandbücher, in denen für alle wichtigen und wartungsrelevanten Bauteile der Maschine detailliert aufgeschlüsselt ist, welche Wartungsschritte für diese Bauteile erforderlich sind. Das Wartungshandbuch enthält zudem spezifische Informationen für alle erforderlichen Wartungsschritte. Diese Informationen betreffen zum Einen den genauen Ablauf der Wartungsschritte, also welche Handgriffe und welche Vorbereitungen dafür notwendig sind, sowie den erforderlichen Status der Maschine während der Wartung. Zum Anderen betreffen sie weitere Informationen über die Häufigkeit der durchzuführenden Wartungsschritte, sowie Auswirkungen auf andere Bauteile der Maschine und mögliche Konsequenzen bei Ausbleiben der Wartung. Diese Wartungshandbücher sind üblicherweise als gedrucktes Exemplar vorhanden und zunehmend auch in elektronischer Form, z. B. auf einer CD im PDF-Format.

Weiterhin ist es im Stand der Technik bekannt, dass die Steuerung der Industriemaschinen über das Benutzerinterface dem Anwender die Information gibt, dass und welche Wartungsschritte durchzuführen sind. Ebenso gibt es Verwaltungssysteme, in denen periodisch auftretende Wartungsvorgänge terminbezogen verwaltet werden.

Ein Problem, das sich aus diesem Stand der Technik ergibt ist, dass dem Anwender bzw. dem Wartungstechniker der Industriemaschine, dem von der Steuerung oder dem Wartungsverwaltungssystem angezeigt wird, dass ein Wartungsvorgang ansteht, notwendige nähere Informationen über den Wartungsvorgang bzw. dessen Durchführung erst lange in einem Handbuch nachschlagen muss. Ein entsprechender Zeit- und Effizienzverlust des Wartungsvorgangs ist dabei die Folge. Es ist auch möglich, dass der Wartungstechniker oder Anwender die notwendigen Informationen im Handbuch nicht findet und aufgrund dieses fehlenden Wissens Fehler bei der Durchführung des Wartungsvorgangs macht, welche im besten Fall einen Zeitverlust und im schlimmsten Fall sogar eine Beschädigung der Maschine nach sich ziehen kann.

Es ist daher Aufgabe der vorliegenden Erfindung, ein System zur Wartung von Industriemaschinen zu offenbaren, welches dem Anwender eine terminbezogene Auflistung aller Wartungsvorgänge zu einem Termin zur Verfügung stellt und dabei in der gleichen Anzeige detaillierte Informationen aus dem Wartungshandbuch zur korrekten Durchführung des ausgewählten Wartungsvorgangs aufzeigt.

Die erfindungsgemäße Lösung dieser Aufgabe stellt ein Verfahren zur Wartung von Industriemaschinen und eine Software für eine Wartungssteuerung dar.

Es handelt sich dabei um ein Verfahren zur Wartung von Industriemaschinen, wobei durch einen Rechner ein mehrstufiger Vergleich zwischen einer eine Wartungs-Checkliste mit mehreren Einträgen mit jeweils einer Identifikationsnummer und einer Wartungsdetailbeschreibung aus dem Handbuch der Maschine mit mehreren hierarchisch gegliederten Kapiteln durchgeführt wird, die folgenden Schritte umfassend:
- Extraktion der in jedem Eintrag in der Wartungs-Checkliste enthaltenen Parameter als Suchparameter, wobei die Suchparameter hierarchisch gegliedert sind
- Abgleich der Suchparameter mit den Überschriften der Kapitel aus der Wartungsdetailbeschreibung, wobei die höchste Hierarchieebene der Suchparameter der ersten Kapitelebene in der Wartungsdetailbeschreibung und jede nächsttiefere Hierarchieebene der Suchparameter der nächsttieferen Unterkapitelebene in der Wartungsdetailbeschreibung zugeordnet ist
- Auswahl des gefundenen Unterkapitels aus der Wartungsdetailbeschreibung, das der tiefsten Hierarchieebene der Suchparameter entspricht und ermitteln der Position in der Wartungsdetailbeschreibung
- Abspeichern der Position und damit Verknüpfen des gefundenen Unterkapitels aus der Wartungsdetailbeschreibung mit der Identifikationsnummer des Eintrags aus der Wartungs-Checkliste in einer Referenztabelle
- Anzeige des entsprechenden Unterkapitels aus der Wartungsdetailbeschreibung auf einem mit dem Rechner verbundenen Display bei Durchführen der Wartung gemäß des Eintrags aus der Wartungs-Checkliste

Das erfindungsgemäße Verfahren ermöglicht also einen mehrstufigen Textvergleich zwischen zwei Dokumenten, wobei das erste Dokument einer Auflistung der Wartungstermine entspricht und jeder Eintrag eine Identifikationsnummer für den Wartungsvorgang, sowie eine notwendige Beschreibung des Wartungsvorgangs enthält. Bei dem zweiten Dokument handelt es sich um das Wartungshandbuch, welches aus hierarchisch gegliederten Kapiteln besteht. Damit eignet sich das erfindungsgemäße Verfahren besonders für die Zuordnung von Detailinformationen aus dem Handbuch einer Maschine zu einer Terminübersicht über notwendige Wartungsvorgänge, also einer Wartungscheckliste. Die oberste Kapitelebene ist dabei einer großen Baugruppe zugeordnet, während sich weitere Unterkapitelebenen mit jeweils kleineren Baugruppen und in der untersten Ebene mit den zu wartenden Bauteilen beschäftigen. Damit der mehrstufige Textvergleich erfolgreich durchgeführt werden kann, müssen aus den Einträgen des ersten Dokumentes die Suchparameter des Wartungsvorganges, nach denen im zweiten Dokument gesucht werden soll, extrahiert werden. Diese Suchparameter sind genauso hierarchisch zu gliedern wie die Kapitel im zweiten Dokument, so dass die unterste Ebene des Suchparameters dem zu wartenden Bauteil entspricht und dann anhand dieser Hierarchie der Suchparameter im zweiten Dokument durch die Kapitelebenen navigiert werden kann bis man dem Unterkapitel, welches die detaillierten Informationen über das Bauteil, was der untersten Ebene der Suchparameter aus Dokument 1 entspricht, beschreibt. Damit ist es möglich, jedem Suchparameter aus Dokument 1 das zugeordnete Kapitel aus Dokument 2 zuzuordnen. Die Zuordnung geschieht durch einen Abgleich der Suchparameter aus dem ersten Dokument mit den Kapitelüberschriften des zweiten Dokuments. War die Zuordnung erfolgreich, so wird die Position der untersten Ebene des Suchparameters in der Kapitelebene des zweiten Dokumentes in einer Referenztabelle abgespeichert. War sie es nicht, so existiert für diesen Eintrag aus Dokument 1 kein beschreibendes Kapitel und der Eintrag in der Referenztabelle bleibt leer. Der Vorteil dieses Verfahrens ist, dass automatisch jedem Eintrag aus Dokument 1 ein Kapitel aus Dokument 2 zugeordnet wird, wodurch dem Anwender, welchem Dokument 1 angezeigt wird, per Auswahl des Eintrages sofort das entsprechende Kapitel aus Dokument 2 gezeigt werden kann. Der Anwender muss also im Falle eines Wartungsvorganges, welcher ihm in seiner Terminliste angezeigt wird, nicht mehr in einem Handbuch nach eventuell notwendigen Informationen suchen, sondern kann einfach den entsprechenden Vorgang auswählen und bekommt die notwendigen Informationen automatisch angezeigt.

Vorteilhafte und daher bevorzugte Weiterbildungen des erfindungsgemäßen Verfahrens ergeben sich aus den zugehörigen Unteransprüchen sowie aus der Beschreibung mit den zugehörigen Zeichnungen.

Eine weitere bevorzugte Weiterbildung des erfindungsgemäßen Verfahrens ist dabei, dass die Wartungscheckliste terminorientiert aufgebaut ist.
Eine terminorientierte Wartungscheckliste hat den Vorteil, dass dem Anwender nicht nur beliebig notwendige Wartungsvorgänge angezeigt werden, sondern die Wartungsintervalle mit den jeweiligen Wartungsvorgängen synchronisiert sind. Der Anwender sieht also zu jedem Termin, an dem ein Wartungsvorgang fällig ist, um welchen Wartungsvorgang es sich dabei handelt und ob an diesem Termin auch andere Wartungsvorgänge fällig sind. Die terminorientierte Wartungscheckliste ist dabei üblicherweise chronologisch geordnet.

Eine weitere bevorzugte Weiterbildung des erfindungsgemäßen Verfahrens ist dabei, dass es sich bei der Maschine um eine Druckmaschine handelt und bei dem Rechner um den Steuerungsrechner der Druckmaschine.
Da auch eine Druckmaschine eine große Industriemaschine darstellt, ist das Verfahren natürlich auch besonders für den Einsatz bei Druckmaschinen geeignet. Dabei wird auf dem Steuerungsrechner der Druckmaschine und dem zugehörigen Display des Steuerungsrechners die terminorientierte Wartungscheckliste angezeigt und, da auf diesem Rechner auch das Handbuch der Druckmaschine in elektronischer Form vorliegt, durch die Durchführung des Verfahrens auf diesem Steuerungsrechner die aus Anspruch 1 bekannte Verknüpfung zwischen der Wartungscheckliste und dem Handbuch mittels Referenztabelle durchgeführt.

Eine weitere bevorzugte Weiterbildung des erfindungsgemäßen Verfahrens ist dabei, dass es sich bei den Suchparametern in hierarchischer Reihenfolge um die zugehörige Hauptbaugruppe, das Bauteil und den ersten Satz des Wartungstextes sowie bei der Identifikationsnummer um die technische Nummer des Wartungsvorganges handelt.
Wie bereits erläutert sind im Wartungshandbuch der Druckmaschine die Hauptkapitel entsprechenden Hauptbaugruppen der Maschine zugordnet und untere Kapitelebenen dann entsprechend zugehörigen Baugruppen, sowie Bauteilen der Druckmaschine. Dementsprechend müssen auch die Suchparameter aus der Wartungscheckliste die entsprechende Hauptbaugruppe, die Baugruppe und das Bauteil, das gewartet werden muss, enthalten. Zudem muss der erste Satz des Wartungstextes aus dem Wartungshandbuch in der Wartungscheckliste gespeichert sein, damit dem Anwender mitgeteilt werden kann, um welchen Wartungsvorgang es sich handelt. Die technische Nummer des Wartungsvorganges, welche der Identifikationsnummer entspricht, muss dabei aus verwaltungstechnischen Gründen ebenfalls mit gespeichert werden. Sie wird zudem für die Zuordnung in der Referenztabelle benötigt.

Eine weitere bevorzugte Weiterbildung des erfindungsgemäßen Verfahrens ist dabei, dass die Kapitelstruktur der Wartungsdetailbeschreibung aus dem Handbuch der Maschine so aufgebaut ist, dass jedem Suchparameter ein Kapitel aus der Wartungsdetailbeschreibung entspricht.
Die Suchparameter müssen jeweils einer Kapitelüberschrift aus der Wartungsdetailbeschreibung aus dem Handbuch der Maschine entsprechen. Nur so ist eine eindeutige Zuordnung von Suchparameter und Kapitel aus dem Handbuch möglich.

Eine weitere bevorzugte Weiterbildung des erfindungsgemäßen Verfahrens ist dabei, dass die Referenztabelle für übersetzte Versionen des ersten und zweiten Dokumentes in anderen Sprachen verwendet wird, wobei die übersetzten Versionen inhaltlich identisch mit der Ausgangsversion sein müssen.

Dadurch dass in der Referenztabelle die genaue Zuordnung von Suchparameter und Kapitel aus dem Wartungshandbuch festgehalten ist, kann diese Referenztabelle auch für Versionen des ersten und zweiten Dokumentes verwendet werden, die in andere Sprachen übersetzt sind, auch wenn bei diesen übersetzten Versionen ein Matching zwischen den Begriffen der Suchparameter und den Kapitelüberschriften der Kapitel des zweiten Dokumentes aufgrund der Übersetzung ev. nicht mehr durchgeführt werden kann. Doch da die Zuordnung ja bereits in der Tabelle festgehalten ist, muss bei den Übersetzungen nicht mehr auf die Zuordnungsbarkeit zwischen Suchparameter und Kapitelüberschriften geachtet werden - d.h. das erfindungsgemäße Verfahren muss kein weiteres Mal mehr durchgeführt werden, sondern man verlässt sich auf die bereits erstellte Referenztabelle. Lediglich die Kapitelstruktur der Kapitel des zweiten Dokumentes darf bei der Übersetzung nicht verändert werden, da sonst die Zuordnung der Referenztabelle zerstört wird.

Eine Umsetzung des erfindungsgemäßen Verfahrens nach Anspruch 1 zur Lösung der gestellten Aufgabe ermöglicht die Entwicklung einer Software für eine Wartungssteuerung einer Druckmaschine mit einer termingeordneten Übersicht von Wartungsprozessen, wobei die Software auf einem mit der Druckmaschine verbundenen Steuerungsrechner eingerichtet ist und die termingeordnete Übersicht von Wartungsprozessen auf einem mit dem Steuerungsrechner verbundenen Display angezeigt wird, wobei die Software dadurch gekennzeichnet ist, dass die Wartungsprozesse jeweils direkt mit einer inhaltlich zugehörigen, detaillierten Beschreibung des jeweiligen Wartungsprozesses aus einem Handbuch der Druckmaschine verknüpft sind und die detaillierte Beschreibung auf dem Display darstellbar ist.
Diese Software stellt dabei die eigentliche Lösung der gestellten Aufgabe dar, da in ihr die termingeordnete Übersicht der Wartungsprozesse realisiert worden ist, wobei jedem Wartungsprozess durch das Verfahren nach Anspruch 1 der entsprechende Abschnitt aus dem Wartungshandbuch der Druckmaschine zugeordnet ist. Dem Anwender oder Wartungstechniker ist es damit möglich, durch Auswahl des jeweiligen Wartungsvorganges direkten Zugriff auf den zugehörigen Beschreibungsteil des ausgewählten Wartungsvorganges aus dem Wartungshandbuch zu nehmen.

Eine bevorzugte Weiterbildung des erfindungsgemäßen Software ist dabei, dass die inhaltlich zugehörige, detaillierte Beschreibung des jeweiligen Wartungsprozesses durch eine Button in der termingeordneten Übersicht der Wartungsprozesse ein- und ausschaltbar ist.
Da ein sofortiges Öffnen des zugehörigen Kapitels aus dem Wartungshandbuch bei Auswahl des Wartungsvorganges aus dem termingeordneten Übersicht unpraktisch wäre, existiert für jeden Eintrag in der Übersicht ein Button, dessen Betätigung durch den Anwender das Öffnen des zugehörigen Eintrags aus dem Wartungshandbuch auslöst.

Das erfindungsgemäße Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:

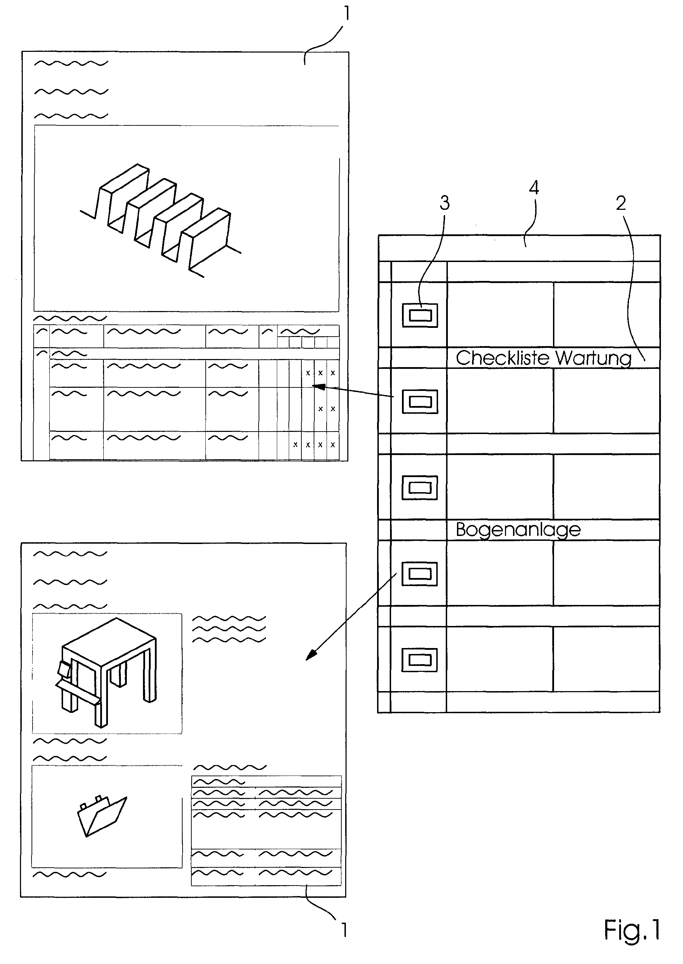

- Figur 1: die termingeordnete Wartungsübersicht mit zugehörigen Kapiteln des Wartungshandbuches,

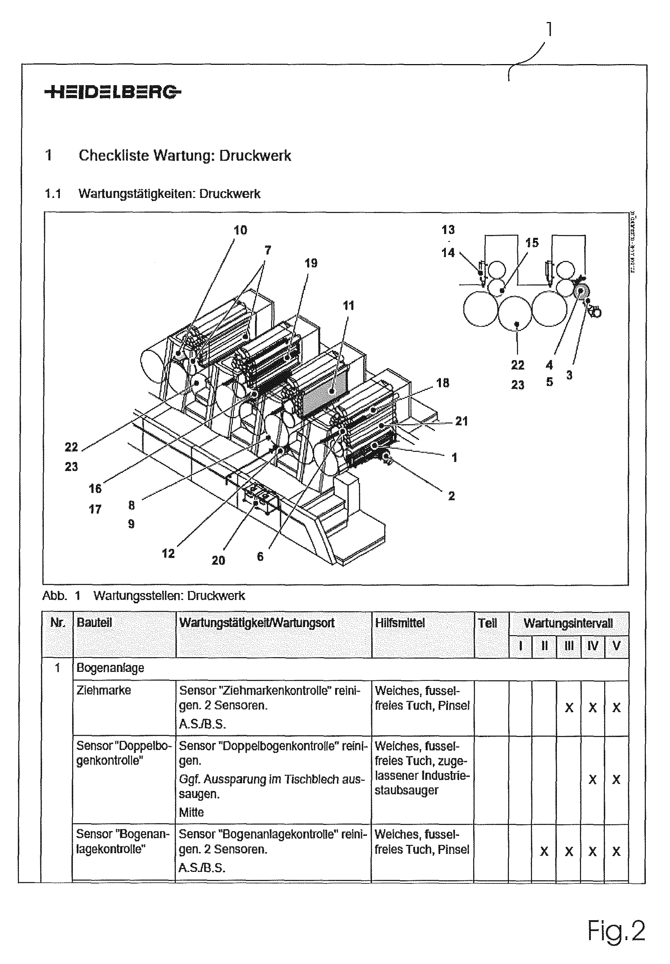

- Figur 2: eine detaillierte Darstellung einer Terminübersicht,

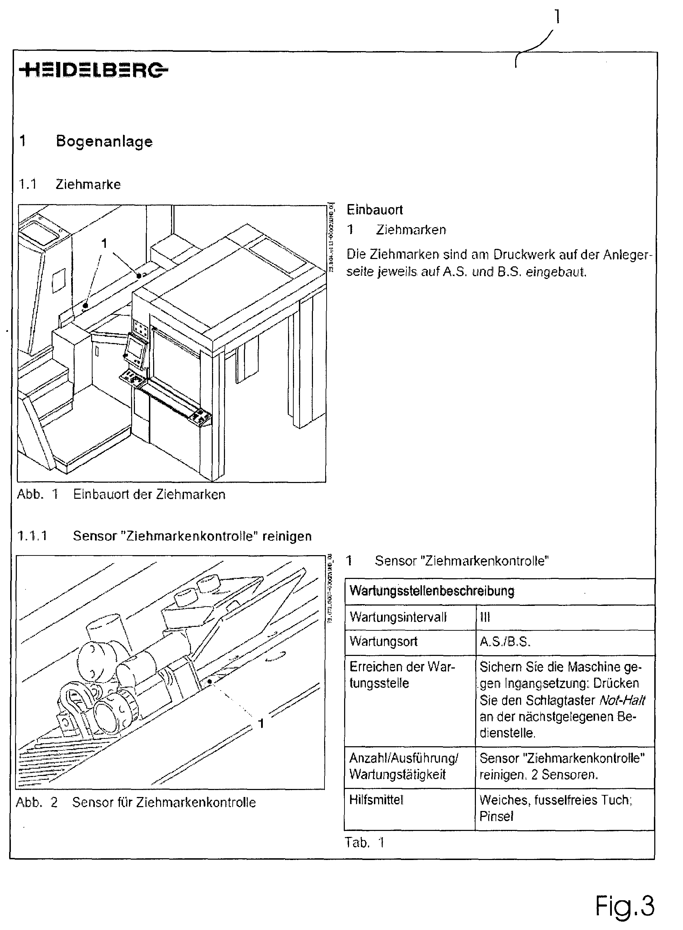

- Figur 3: das zugehörige Kapitel aus dem Wartungshandbuch,
- Figur 4: eine schematische Darstellung des Ablaufes des erfindungsgemäßen Verfahrens.

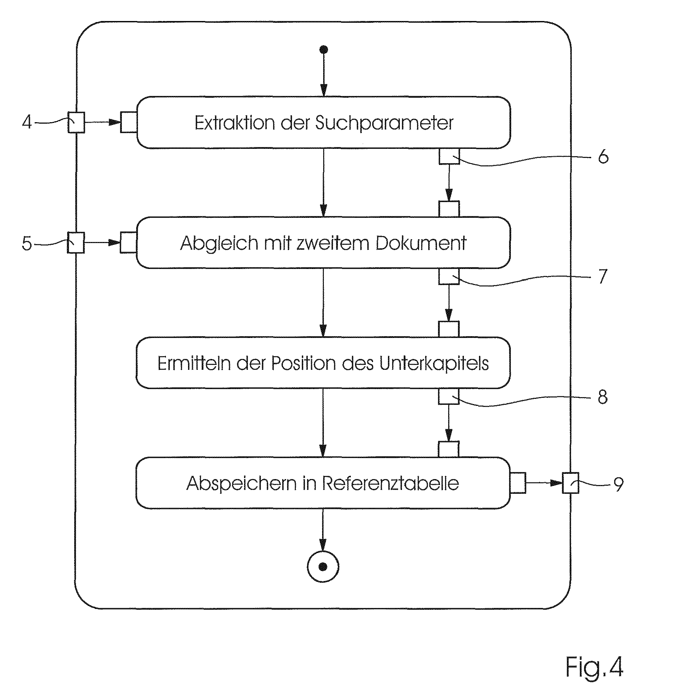

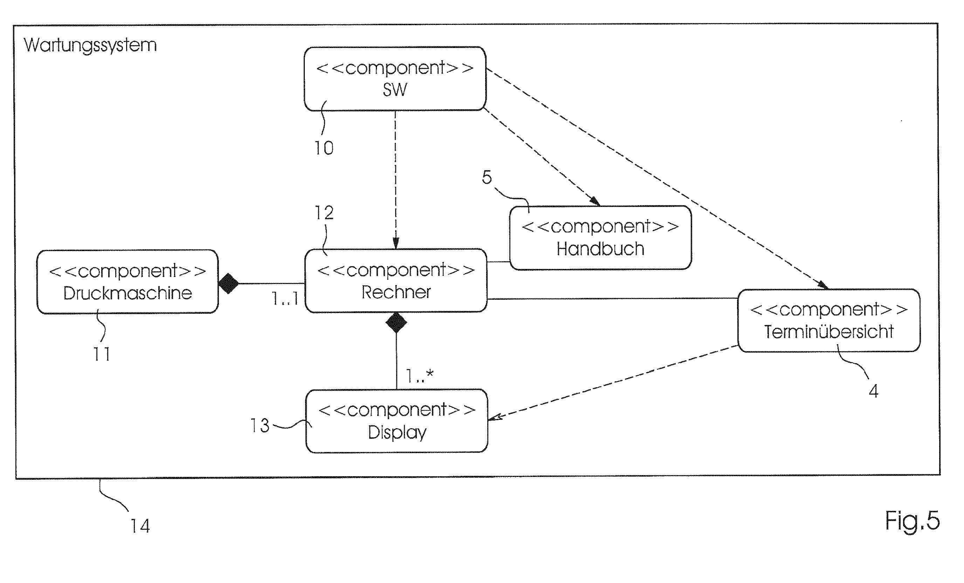

Das bevorzugte Ausführungsbeispiel der Erfindung wird im Folgenden beschrieben. Es existiert ein Wartungssystem 14, dessen Aufbau in Figur 5 aufgezeigt wird. Es beinhaltet eine Software 10, welche die Wartungsvorgänge der zugehörigen Druckmaschine 11 und ihre Wartungsintervalle verwaltet und auf einem Rechner 12 eingerichtet ist. Der Rechner kann entweder der Steuerungsrechner der Druckmaschine 11 oder ein separater Rechner sein. Im Falle eines separaten Rechners kann dies ein normaler PC oder auch ein Tablet-Computer, bzw. ein geeignetes Smartphone sein. Die Wartungsvorgänge werden auf dem Display 13, des Rechners 12 terminorientiert für den Anwender angezeigt. Dies bedeutet, dass die sich aus den Wartungsvorgängen und ihren zugehörigen Wartungsintervallen ergebenden Wartungstermine chronologisch in einer Liste durch die Wartungssoftware 10 auf dem Rechner 12 geordnet werden und diese Liste dann in einer termingeordneten Übersicht 4 auf dem Display 13 angezeigt werden. Neben jedem Eintrag 2 in dieser termingeordneten Übersicht 4 existiert ein Button 3, mit welchem das entsprechende Kapitel im Wartungshandbuch 1 für den im Eintrag 2 der termingeordneten Übersicht 4 ausgewählten Wartungsvorgang geöffnet werden kann. Vor Durchführung des erfindungsgemäßen Verfahrens des mehrstufigen Textvergleiches besitzt dieser Button 3 noch keine Funktion. Um die Funktion zu aktivieren, muss nun das Verfahren des mehrstufigen Textvergleiches durchgeführt werden. Der Ablauf ist in Figur 4 näher erläutert. Dazu müssen auf dem Rechner 12 neben der Software 10 der Wartungssteuerung das Wartungshandbuch 5 der Druckmaschine 11 in elektronischer Form vorliegen und zudem eine Software, welche den mehrstufigen Textvergleich durchführt. Diese Software kann, genauso wie die Software zur Wartungssteuerung, Teil der Steuerungssoftware der Druckmaschine sein. Auch eine Kombination ist möglich, d. h. die Software zur Durchführung des mehrstufigen Textvergleiches kann ein Softwaremodul der Wartungssteuerungssoftware sein und diese wiederum ein Modul der Steuerungssoftware der Druckmaschine. Falls es sich um eigenständig arbeitende Programme handelt, kommunizieren sie über entsprechend angepasste Schnittstellen. In der bevorzugten Ausführungsvariante ist es vorgesehen, dass bei Erstellung der terminorientierten Wartungsübersicht 4 im Hintergrund das Softwaremodul zur Durchführung des mehrstufigen Textvergleiches gestartet wird. Dieses Softwaremodul extrahiert nun aus jedem Eintrag 2 in der terminorientierten Wartungsübersicht 4 mehrere Suchparameter 6. Diese Suchparameter 6 sind insbesondere die zugehörige Hauptbaugruppe des zu wartenden Bauteils, die zugehörige Baugruppe, das zu wartende Bauteil selbst und der erste Satz des Wartungstextes. Der erste Satz des Wartungstextes beschreibt dabei, welche Wartungshandlung an dem zu wartenden Bauteil durchzuführen ist. Ein weiterer zu extrahierender Suchparameter 6 ist die Identifikationsnummer des Wartungsvorganges, welche zur Verwaltung der erstellten Referenzen notwendig ist. Diese Suchparameter 6 sind also mit Ausnahme der Identifikationsnummer hierarchisch aufgebaut. Diese Hierarchie entspricht dabei der Hierarchie der Gliederung des Wartungshandbuches 5. So besitzt jede Hauptbaugruppe der Druckmaschine ein entsprechendes Oberkapitel im Wartungshandbuch. Dieses Oberkapitel wiederum besteht aus mehreren Unterkapiteln, die jeweils einer Baugruppe zugeordnet sind, bzw. sich mit dieser Baugruppe beschäftigen. Die Unterkapitel besitzen wiederum mehrere Unterkapitel, die sich mit den einzelnen Bauteilen der Unterbaugruppe beschäftigen. In jedem Unterkapitel eines Bauteils werden alle möglichen Wartungsvorgänge, die für dieses Bauteil von Belang sein können, detailliert beschrieben. Die Gliederung des Wartungshandbuches 5 entspricht also der Gliederung der Suchparameter 6, welche aus dem Eintrag 2 in der terminorientierten Wartungsübersicht 4 extrahiert werden. Das Softwaremodul, welches den mehrstufigen Textvergleich durchführt, macht nun einen Textvergleich zwischen dem obersten Suchparameter und den Überschriften alle Oberkapitel des Wartungshandbuches. Hat es das entsprechende Oberkapitel der Hauptbaugruppe gefunden, macht es einen Textvergleich zwischen dem nächsttieferen Suchparameter und allen Überschriften der Unterkapitel des gefundenen Oberkapitels. Dieser Vorgang wird so lange fortgesetzt, bis das Softwaremodul im Wartungshandbuch das Kapitel des zu wartenden Bauteils gefunden hat. Dann erstellt das Softwaremodul eine Referenztabelle 9 und ordnet jeder Identifikationsnummer des Wartungsvorganges, die einem Eintrag 2 in der terminorientierten Wartungsübersicht 4 entspricht, das Kapitel über das zu wartende Bauteil aus dem Wartungshandbuch 5 in Form der Kapitelnummerierung des Wartungshandbuches 5 zu. Die Referenztabelle 9 besteht also aus den Identifikationsnummern des Wartungsvorganges der Checkliste und der Kapitelnummerierung des entsprechend zugehörigen Zielkapitels 1 aus dem Wartungshandbuch 5. Die Software 10 zur Wartungssteuerung wiederum greift auf diese Referenztabelle 9 zu und verknüpft mit deren Hilfe den Button 3 eines jeden Eintrages 2 in der terminorientierten Wartungsübersicht 4 mit dem zugehörigen Kapitel 1 aus dem Wartungshandbuch 5. Betätigt nun der Anwender diesen Button 3, öffnet sich auf dem Display 13 des Rechners 12 ein Fenster mit dem entsprechenden Kapitel 1 des Wartungshandbuches 5.

In einer erweiterten Ausführungsvariante überprüft das Softwaremodul zum mehrstufigen Textvergleich zudem, ob eine übersetzte Variante des Wartungshandbuches 5 in einer oder mehreren anderen Sprachen vorhanden ist. Falls dem so ist, erstellt es eine zweite oder gegebenenfalls dritte und vierte Referenztabelle mit den gleichen Identifikationsnummern der Wartungsvorgänge und trägt dort die Kapitelnummerierung desselben Zielkapitels 1 ein, wie in dem ursprünglichen Wartungshandbuch 5. Bedingung für diese Funktion ist dabei, dass die übersetzten Versionen des Wartungshandbuches 5 die gleiche inhaltliche Gliederung aufweisen, wie die Originalvariante. Die Übersetzung der einzelnen Abschnitte selbst ist jedoch für das Verfahren nicht von Belang.

### Bezugszeichenliste

- 1: Kapitel aus Wartungshandbuch
- 2: Eintrag aus Wartungsübersicht
- 3: Button zum Aktivieren der Kapitelanzeige
- 4: terminorientierte Wartungsübersicht
- 5: Wartungshandbuch
- 6: extrahierte Suchparameter
- 7: Ziel-Unterkapitel
- 8: Position des Unterkapitels in Wartungshandbuch
- 9: Referenztabelle
- 10: Software
- 11: Druckmaschine
- 12: Rechner
- 13: Display
- 14: Wartungssystem

## Patentansprüche

1. Verfahren zur Wartung von Industriemaschinen nach einer Wartungs-Checkliste (4), wobei durch einen Rechner ein mehrstufiger Vergleich zwischen der Wartungs-Checkliste (4) mit mehreren Einträgen mit jeweils einer Identifikationsnummer und einer Wartungsdetailbeschreibung aus dem Handbuch (5) der Maschine mit mehreren hierarchisch gegliederten Kapiteln (1) durchgeführt wird, die folgenden Schritte umfassend:
- Extraktion der in jedem Eintrag (2) in der Wartungs-Checkliste (4) enthaltenen Parameter als Suchparameter (6), wobei die Suchparameter (6) hierarchisch gegliedert sind
- Abgleich der Suchparameter (6) mit den Überschriften der Kapitel (1) aus der Wartungsdetailbeschreibung, wobei die höchste Hierarchieebene der Suchparameter (6) der ersten Kapitelebene in der Wartungsdetailbeschreibung und jede nächsttiefere Hierarchieebene der Suchparameter (6) der nächsttieferen Unterkapitelebene in der Wartungsdetailbeschreibung zugeordnet ist
- Auswahl des gefundenen Unterkapitels (1) aus der Wartungsdetailbeschreibung, das der tiefsten Hierarchieebene der Suchparameter (6) entspricht und ermitteln der Position (8) in der Wartungsdetailbeschreibung
- Abspeichern der Position (8) und damit Verknüpfen des gefundenen Unterkapitels aus der Wartungsdetailbeschreibung mit der Identifikationsnummer des Eintrags (2) aus der Wartungs-Checkliste (4) in einer Referenztabelle (9)
- Anzeige des entsprechenden Unterkapitels aus der Wartungsdetailbeschreibung auf einem mit dem Rechner verbundenen Display (13) bei Durchführen der Wartung gemäß des Eintrags (2) aus der Wartungs-Checkliste (4)

2. Verfahren nach Anspruch 1,
**dadurch gekennzeichnet,**
**dass** die Wartungs-Checkliste (4) terminorientiert aufgebaut ist.

3. Verfahren nach Anspruch 2,
**dadurch gekennzeichnet,**
**dass** es sich bei der Maschine um eine Druckmaschine (11) handelt und bei dem Rechner um den Steuerungsrechner (12) der Druckmaschine oder einen separaten Rechner.

4. Verfahren nach einem der vorherigen Ansprüche,
**dadurch gekennzeichnet,**
**dass** es sich bei den Suchparametern (6) in hierarchischer Reihenfolge um die zugehörige Hauptbaugruppe, die zugehörige Baugruppe, das Bauteil und den ersten Satz des Wartungstextes, sowie die Identifikationsnummer des Wartungseintrags in der Wartungs-Checkliste (4) handelt.

5. Verfahren nach Anspruch 4,
**dadurch gekennzeichnet,**
**dass** die Kapitelstruktur der Wartungsdetailbeschreibung aus dem Handbuch (5) der Maschine so aufgebaut ist, dass jedem Suchparameter (6) ein Kapitel (1) aus der Wartungsdetailbeschreibung entspricht.

6. Verfahren nach einem der vorherigen Ansprüche,
**dadurch gekennzeichnet,**
**dass** die Referenztabelle (9) für übersetzte Versionen der Wartungs-Checkliste (4) und der Wartungsdetailbeschreibung in anderen Sprachen verwendet wird, wobei die übersetzten Versionen inhaltlich identisch mit der Ausgangsversion sein müssen.

7. Software (10) für eine Wartungssteuerung einer Druckmaschine (11) erstellt durch ein Verfahren nach Anspruch 1, mit einer termingeordneten Übersicht von Wartungsprozessen (4), wobei die Software (10) auf einem mit der Druckmaschine (11) verbundenen Steuerungsrechner (12) eingerichtet ist und die termingeordnete Übersicht von Wartungsprozessen (4) auf einem mit dem Steuerungsrechner (12) verbundenen Display (13) angezeigt wird,
**dadurch gekennzeichnet,**
**dass** die Wartungsprozesse jeweils direkt mit einer inhaltlich zugehörigen, detaillierten Beschreibung des jeweiligen Wartungsprozesses aus einem Handbuch (5) der Druckmaschine (11) verknüpft sind und die detaillierte Beschreibung auf dem Display (13) darstellbar ist.

8. Software (10) nach Anspruch 7,
**dadurch gekennzeichnet,**
**dass** die inhaltlich zugehörige, detaillierte Beschreibung des jeweiligen Wartungsprozesses durch einen Button (3) in der termingeordneten Übersicht der Wartungsprozesse (4) ein- und ausschaltbar ist.
